**Europäisches Patentamt**

**European Patent Office**

**Office européen des brevets**

(19)

(11) Numéro de publication: **0 250 280**
**B1**

(12) **FASCICULE DE BREVET EUROPEEN**

(45) Date de publication du fascicule du brevet:
21.03.90

(51) Int. Cl.⁴: **G01V 1/22**

(21) Numéro de dépôt: 87401125.7

(22) Date de dépôt: 20.05.87

(54) **Système de transmission de signaux sismiques utilisant des radio relais.**

(30) Priorité: 30.05.86 FR 8607930

(43) Date de publication de la demande:
23.12.87 Bulletin 87/52

(45) Mention de la délivrance du brevet:
21.03.90 Bulletin 90/12

(84) Etats contractants désignés:
DE ES GB IT NL

(56) Documents cités:
EP-A- 0 115 717
US-A- 2 864 943
US-A- 3 987 406
US-A- 4 230 989

(73) Titulaire: INSTITUT FRANCAIS DU PETROLE, 4, Avenue de Bois-Préau, F-92502 Rueil-Malmaison(FR)

(72) Inventeur: Deconinck, Bernard, 22, rue des Prairies, F-78230 Le Pecq(FR)
Inventeur: Oliveres, André, 60, rue du Chemin Vert, F-92100 Boulogne(FR)
Inventeur: Rialan, Joseph, 15, rue des Bigots, F-92190 Meudon(FR)
Inventeur: Thierry, Gérard, 7, avenue de la Grande Armée, F-75016 Paris(FR)

(74) Mandataire: Kermarrec, Michelle et al, Institut Français du Pétrole 4, avenue de Bois-Préau, F-92502 Rueil-Malmaison(FR)

ACTORUM AG

## Description

L'invention a pour objet un système de transmission par voie hertzienne de signaux entre un laboratoire central de commande et d'enregistrement et des appareils d'acquisition de données sismiques, utilisant un ou plusieurs relais radio.

Le système de transmission selon l'invention concerne plus particulièrement la transmission de signaux entre un système central de commande et des appareils d'acquisition de données sismiques agencés pour transmettre à la fois par radio et par câble de transmission, les signaux sismiques qu'ils ont collectés, numérisés et enregistrés. Ces signaux leur sont fournis par des ensembles de capteurs sismiques répartis le long d'un profil sismique à étudier, en réponse aux échos sur des couches réfléchissantes du sous-sol de signaux sismiques engendrés dans le sol par une source d'ébranlements appropriée.

Un dispositif adapté à la transmission d'ordres et de données par câble ou par ondes hertziennes est décrit dans la demande de brevet français publiée 2.511.772. Il est associé d'une part à une pluralité d'appareils d'acquisition adaptés chacun à communiquer avec un système central de commande et d'enregistrement par radio ou par câble, qui sont disposés dans des boîtiers ou des bouées déposés sur le terrain à une certaine distance les uns des autres et reliés aux récepteurs sismiques.

Les appareils d'acquisition ayant collecté les données fournies par les capteurs sismiques qui leur sont respectivement associés, le système central de commande et d'enregistrement envoie des ordres de transmission successivement à tous les appareils d'acquisition pour qu'ils transmettent les signaux collectés. Les transmissions de données sont effectuées de préférence par voie hertzienne lorsque la qualité des transmissions est suffisante. Mais lorsque le terrain où sont disposés les boîtiers ou bouées est très accidenté ou lorsque des obstacles (forêts épaisses par exemple) s'opposent à la bonne transmission des ondes hertziennes depuis certains boîtiers ou certains groupe de boîtiers particuliers, on doit connecter ceux-ci par un câble de transmission au système central de commande et d'enregistrement, les autres étant reliés au système central par radio.

Les liaisons par câble sont très fiables quel que soit la nature ou le relief du terrain mais leur mise en place nécessite des opérations de pose et de dépose longues et coûteuses, surtout dans les régions de montagnes ou de marécages.

La connexion sélective des boîtiers ou bouées au câble de transmission commun permet de simplifier notablement la phase d'installation sur le terrain de l'ensemble de réception sismique. Mais, ce système de transmission mixte présente parfois certains inconvénients dans le cas où, par exemple, le nombre de boîtiers pour lesquels les liaisons hertziennes satisfaisantes sont impossibles, est relativement faible et où il est cependant nécessaire de dérouler un câble de transmission, parfois sur de grandes distances, pour les relier au système central, en traversant des zones où les liaisons hertziennes sont satisfaisantes. Ce cas se présente par exemple lorsqu'une partie des boîtiers ou bouées est disposée sur le même versant d'une élévation de terrain que le système central de commande et d'enregistrement, et accessible par voie hertzienne et qu'une autre partie d'entre eux est installée sur le versant opposé et seulement accessible par un câble de transmission. Un tel câble doit en conséquence être mis en place pour franchir l'élévation de terrain et permettre la liaison de ces boîtiers éloignés au système central.

Dans certains cas également, la plupart des boîtiers ou bouées sont disposés dans une zone à l'intérieur de laquelle les transmissions par radio sont satisfaisantes, mais par contre difficilement accessibles depuis le système central de commande et d'enregistrement lorsque celui-ci se trouve en dehors de ladite zone, ce qui oblige également à dérouler un câble de transmission de grande longueur entre ces boîtiers et le système central.

Le système de transmission selon l'invention permet d'éviter les inconvénients ci-dessus mentionnés.

Il comporte des moyens d'émission et de réception par radio associés respectivement aux différents boîtiers d'acquisition, une unité de centralisation des communications associée au laboratoire central, comportant un premier ensemble d'émission et de réception radio adapté à fonctionner sur une première fréquence et un second ensemble de radio-émission et réception adapté à fonctionner sur une seconde fréquence, différente de la première, et au moins une unité relais.

Il est caractérisé en ce que chaque unité relais comporte un premier ensemble d'émission et de réception radio adapté à fonctionner à ladite première fréquence pour assurer les échanges entre ladite unité relais et le premier ensemble d'émission et de réception radio de l'unité de centralisation, et un second ensemble d'émission et de réception radio adapté à fonctionner sur une troisième fréquence particulière à chaque unité relais, pour assurer des communications avec au moins un premier groupe de boîtiers d'acquisition, l'unité de centralisation comporte un ensemble de contrôle pourvu d'un organe de traitement programmable pour gérer les transferts à la première fréquence entre l'unité de centralisation et chaque unité relais ainsi que les transferts entre l'unité de centralisation et au moins un second groupe de boîtiers d'acquisition en utilisant la seconde fréquence, chaque unité relais comporte un ensemble de contrôle pourvu d'un organe de traitement programmable pour gérer ses propres transferts à ladite troisième fréquence avec le premier groupe de boîtiers d'acquisition associé.

L'utilisation d'unités relais pouvant gérer des communications par radio avec des boîtiers d'acquisition inaccessibles ou mal accessibles directement depuis l'emplacement du laboratoire central, d'une unité de centralisation pouvant gérer les communications entre le laboratoire central, les boîtiers d'acquisition accessibles directement et les unités relais, à des fréquences distinctes pour éviter les interactions radio indésirables, rend le système de communication entièrement transparent. Le laboratoire central ayant à échanger des commandes ou des données avec un quelconque des boîtiers d'acquisition, délègue à l'unité de centralisation le soin d'établir la communication par le canal radio qui convient le mieux pour ce boîtier suivant une procédure préétablie. Le pilotage des boîtiers d'acquisition depuis le laboratoire central est donc grandement facilité.

Suivant un mode de réalisation, la fréquence de communication entre chaque unité relais et le groupe de boîtiers d'acquisition associé est distincte pour chaque unité relais, les ensembles d'émission et de réception radio associés aux boîtiers d'acquisition, à l'unité de centralisation et à chaque unité relais, comportant un générateur à synthèse de fréquence et des moyens de sélection commutables de la fréquence d'émission-réception de chacun d'eux parmi une pluralité de fréquence distinctes.

La sélection et le changement des fréquences des porteuses radio pouvant être effectués rapidement, leur adaptation aux règlementations en vigueur concernant les télécommunications est facilitée.

Chaque unité relais peut comporter des moyens de mesure de signaux de test et des moyens pour traduire les signaux de modulation de la première fréquence (celle de la porteuse permettant les échanges entre l'unité de centralisation et les unités relais), les ensembles de contrôle de l'unité de centralisation et de chaque unité relais étant adaptés à commander la transmission des signaux de test dans des intervalles de temps entre les transmission de signaux de commande et de données. Cet agencement est avantageux dans la mesure où il permet de surveiller à distance le bon fonctionnement des unités relais et des équipements radio affectés aux communications entre chaque unité relais et le groupe de boîtiers d'acquisition sous sa dépendance.

D'autres caractéristiques et avantages du système selon l'invention apparaîtront à la lecture de la description d'un mode de réalisation donné à titre d'exemple non limitatif, en se reportant aux dessins annexés où :

- la figure 1 montre le schéma synoptique du système de transmission dans son ensemble;
- la figure 2 montre un générateur d'onde porteuse à synthèse de fréquence;
- la figure 3 montre le schéma synoptique de l'ensemble de contrôle contenu dans l'unité de centralisation;
- la figure 4 montre le schéma synoptique de l'ensemble de contrôle contenu dans chaque unité relais;
- la figure 5 représente schématiquement un dispositif contenu dans chaque unité relais pour engendrer des signaux de modulation traduisant les valeurs prises par une tension d'alimentation et l'amplitude d'une porteuse radio; et
- la figure 6 représente des chronogrammes d'une séquence d'interrogation d'un boîtier d'acquisition relayé par une unité relais.

Le système selon l'invention est adapté à établir des communications entre un laboratoire de commande et d'enregistrement et un ensemble d'appareils ou de boîtiers d'acquisition de données sismiques répartis sur le terrain où les opérations sismiques ont lieu. Chaque appareil est adapté à collecter des signaux sismiques captés par un ou plusieurs récepteurs sismiques couplés avec le sol, ces signaux correspondant à des échos sur des réflecteurs souterrains d'ébranlements appliqués au sol par une source sismique d'un type quelconque, à numériser les signaux capter et à les enregistrer. A la fin de chaque cycle d'émission-réception, les appareils d'acquisition commandés en conséquence par le laboratoire, lui transmettent les données qu'ils ont mémorisées.

On utilise avantageusement les appareils d'acquisition décrits dans le brevet français n, 2.511.772. Ces appareils peuvent être indifféremment reliés à un laboratoire central de commande et d'enregistrement par un câble de transmission commun soit par une liaison hertzienne. En l'absence de câble, chaque appareil communique par radio avec le laboratoire central. Si le câble de transmission leur est connecté, leurs moyens radio propres sont mis hors circuit et les liaisons avec le laboratoire se font par le câble de transmission.

Les appareils d'acquisition sont disposés de préférence dans des boîtiers étanches associés éventuellement à des bouées, lorsque l'on opère dans des zones recouvertes d'eau ou très humides (lacs, marécages, forêts etc).

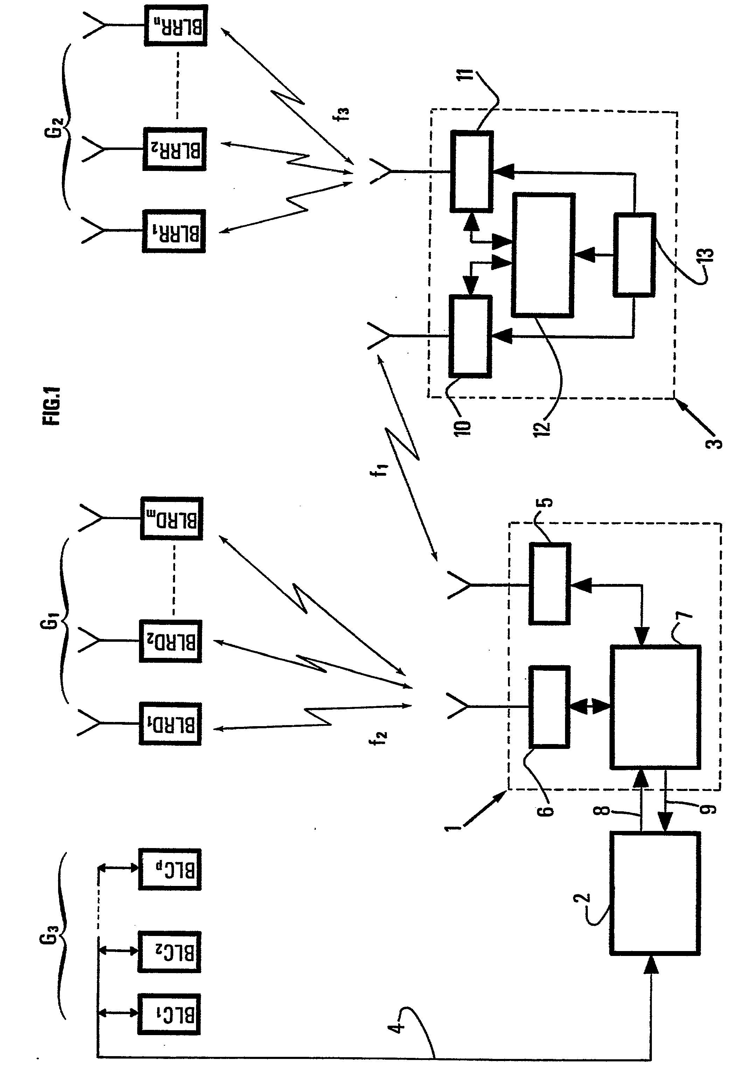

Si l'on se reporte à la figure 1, on voit que le système de transmission comporte une unité 1 de centralisation des échanges par voie hertzienne (CRU) entre un laboratoire de commande et d'enregistrement 2 et les boîtiers d'acquisition répartis sur le terrain. L'ensemble des boîtiers d'acquisition comporte un premier sous-ensemble G1 de boîtiers BLRD1, BLRD2... BLRDm à liaison radio directe, c'est-àdire capable, du fait de leur situation dans une zone favorable à la bonne propagation des ondes hertziennes, de communiquer directement avec l'unité de centralisation 1. L'ensemble des boîtiers comporte également un second sous-ensemble G2 de boîtiers BLRR1, BLRR2... BLRRn à liaison radio relayée c'est-à-dire des boîtiers inaccessibles directement par voie hertzienne du fait de leur situation sur le terrain, du relief de celui-ci ou de sa végétation. La liaison avec les boîtiers du sous-ensemble G2 est assurée par au moins une unité 3 de transmission relais (RRU) adaptée à relayer les échanges par voie hertzienne entre l'unité de centralisation 1 et une partie au moins des boîtiers du groupe G2. L'unité de transmission relais 3 ou chacune d'entre elles, est disposée sur le terrain à un emplacement choisi où les communications radio avec l'unité de centralisation 1 d'une part chacun des boîtiers du groupe de boîtiers associés, sont faciles à établir.

L'ensemble des boîtiers peut comporter aussi facultativement un sous-ensemble G3 de boîtiers BLC1, BLC2... BLCp que du fait de leur structure particulière (décrite dans la demande de brevet précitée), sont reliés au laboratoire central 2 par un câble de transmission commun 4.

L'unité 1 de centralisation (CRU) comporte un premier émetteur-récepteur d'ondes hertziennes 5 à fréquence f1 pour l'établissement de liaisons radio avec l'unité de transmission relais 3, un second émetteur-récepteur d'ondes hertziennes 6 à fréquence f2 différente de f1 pour les liaisons radio avec les boîtiers accessibles du groupe G1, et un ensemble de contrôle 7 connecté d'une part aux deux émetteurs-récepteurs 5, 6 et d'autre part au laboratoire 2. La connexion avec celui-ci est assurée par un câble de transmission comportant des lignes 8 de transmission de signaux de commande et des lignes 9 de transmission de signaux de données.

Chaque unité de transmission relais 3 comporte un premier émetteur-récepteur d'ondes hertziennes 10 à fréquence f1 permettant les communications avec le premier émetteur-récepteur 5 de l'unité de centralisation 1, et un second émetteur-récepteur à fréquence f3 pour établir les liaisons radio avec les différents boîtiers du groupe G2 qui sont sous son contrôle, un ensemble de contrôle 12 pour établir sélectivement les échanges entre les deux émetteurs-récepteurs 10, 11, et une source d'alimentation électrique 13.

Les boîtiers d'acquisition comportent chacun un émetteur-récepteur centré sur la fréquence f2 ou f3, selon la fréquence de transmission de l'élément avec lequel il communique, qu'il s'agisse de l'unité de centralisation 1 ou d'une unité de transmission relais 3, comme on le verra plus en détail dans la suite de la description. A titre d'exemple, la fréquence f1 peut être choisie dans la bande des 220 MHz, les fréquences f2 et f3 dans la bande des 70 à 76 MHz, en fonction des règlementations officielles des télécommunications du lieu où le système de transmission sismique est utilisé. Si l'on emploie plusieurs unités de transmission relais, chacune d'elles communique avec le sous ensemble de boîtiers qu'elle contrôle à une fréquence particulière.

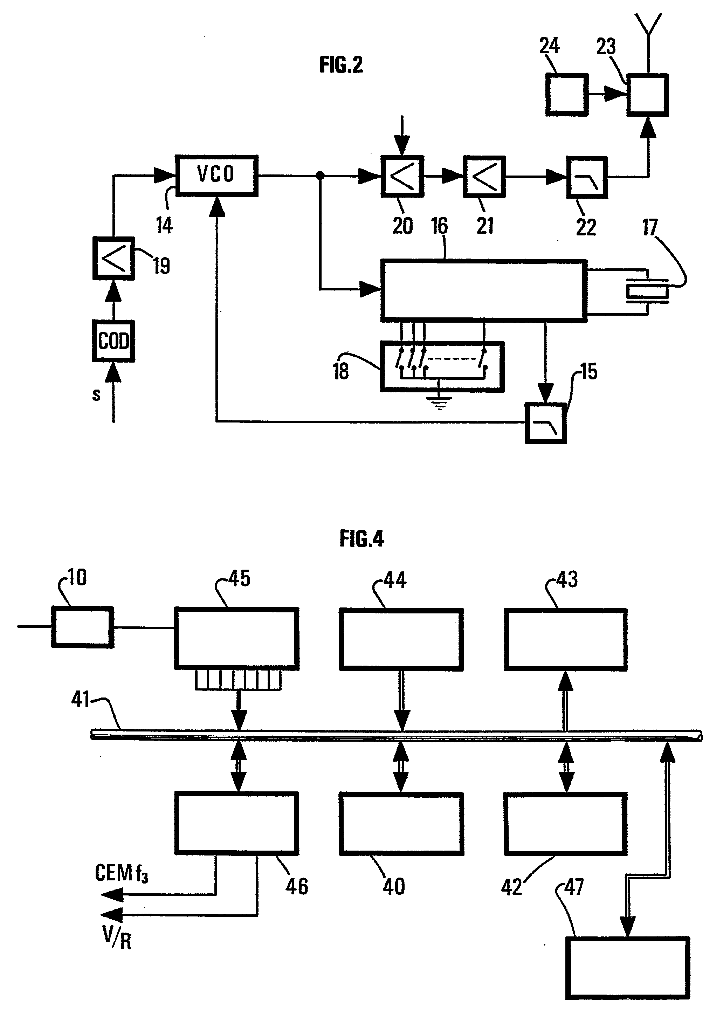

Le réglage des fréquences de communication est facilité par l'utilisation d'émetteurs à synthétiseur de fréquence que ce soit, dans l'unité de centralisation 1, l'unité de transmission relais 3 ou dans les boîtiers d'acquisition. Un tel émetteur comporte (fig. 2) un oscillateur 14 du type VCO dont la fréquence d'oscillation est déterminée par l'application d'une tension de commande issue d'un filtre passe-bas 15. L'entrée du filtre 15 est connecté à la sortie d'un circuit synthétiseur de fréquence 16 d'un type connu comportant des boucles d'asservissement de phase (PLL) et un prédiviseur permettant d'appliquer à la fréquence de référence émise par un quartz 17, un facteur de réduction programmable. La sélection de ce facteur de réduction est opérée en manoeuvrant sélectivement des commutateurs d'un ensemble de commutateurs 18. Le signal appliqué à l'entrée du circuit synthétiseur est le signal de sortie de l'oscillateur (VCO) 14. Le signal à transmettre est amplifié par un étage d'amplification 19 et appliqué à l'entrée "modulation" de l'oscillateur 14. La porteuse modulée disponible à la sortie de l'oscillateur 14, est appliquée à une chaine d'amplification comportant un préamplificateur 20, un amplificateur de puissance 21 et un filtre passe-bas 22, le signal amplifié étant appliqué à une antenne d'émission-réception Y par l'intermédiaire d'un duplexeur d'antenne d'un type connu 23 permettant le fonctionnement alterné de l'émetteur et du récepteur 24 associé.

Le signal appliqué à l'entrée de l'étage d'amplification 19 est issu d'un élément de codage COD appliquant par exemple le code NRZ aux signaux numérisés à transmettre.

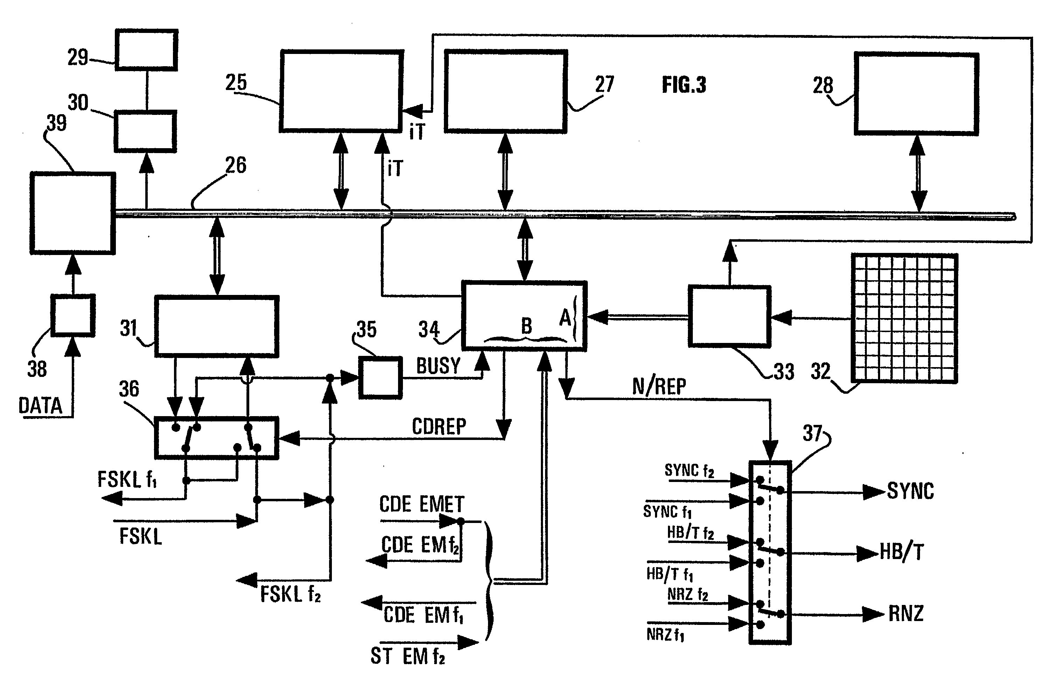

L'ensemble de contrôle 7 de l'unité de centralisation 1 (CRU) comporte (fig. 3), un microprocesseur 8 bits 25 du type NSC800 par exemple, communiquant par bus d'adresses et de données 26 avec des mémoires mortes 27 du type REPROM, des mémoires vives du type RAM 28 un afficheur 29 connecté sur les bus 26 par l'intermédiaire d'un contrôleur 30, un circuit d'adaptation 31 du type UART pour adapter les signaux avant leur transmission ou inversement les signaux reçus avant leur transfert sur le bus 26, un clavier 32 permettant à un opérateur de donner des instructions, le clavier étant connecté à un encodeur de clavier 33, une carte d'interface 34 pourvue de deux ports d'entrée sortie en parallèle A, B, d'un détecteur 35 de message FSK (en anglais : frequency shift keying) et deux multiplexeurs 36, 37. Il comporte également un élément 38 de filtrage et de mise en forme des signaux DATA représentant les données reçues par les ensembles d'émission-réception 5, 6, et modulant la porteuse à fréquence f1 ou la porteuse à fréquence f2, et un ensemble de compteurs 39 engendrant une séquence d'impulsions décalées qui seront définies ultérieurement dans la partie de la description relative au fonctionnement du système.

Les différents signaux présents sur les entrées et les sorties de la carte d'interface, des multiplexeurs 36, 37 et du détecteur 35, et leurs fonctions sur les suivants.

CDE EM f1 : est engendré par l'ensemble de contrôle 7. Au niveau logique bas, il commande l'émission par l'émetteur-récepteur 5 (fig. 1) de la porteuse de fréquence f1;

STEM f1 : est un signal issu du synchro-primaire de l'émetteur-récepteur 5, et synchrone avec le signal HBIT f1 lequel

H BIT f1 : est un signal d'horloge régénéré par le synchro-primaire de l'émetteur-récepteur 5;

SYNC f1 : est un signal indiquant, à l'état logique bas, le verrouillage du synchro-primaire;

FSKL f1 : est un signal logique pour le pilotage du modulateur FSK de l'émetteur-récepteur 5;

CDE EM f2 : est un signal commandant l'émission d'une porteuse de fréquence f2 par l'émetteur-récepteur 6, lorsqu'il se trouve au niveau logique bas;

ST EM f2 : indique, au niveau logique bas, que l'émetteur-récepteur 6 émet bien une porteuse de fréquence f2;

NRZ f2 : est issu du synchro-primaire de l'émetteur-récepteur 6 et synchrone avec le signal H B/T f2, lequel

H B/T f2 : indique à l'état logique bas le verrouillage du synchro-primaire;

FSKL f2 : est un signal pilotant le modulateur FSK de l'émetteur-récepteur à fréquence f2;

CDE EMT : est un signal de commande émis par le laboratoire de commande 2 (fig. 1) pour le déclenchement de l'émission d'une porteuse par les émetteurs-récepteurs 5 et 6;

ST EMET : indique au laboratoire 2 l'état de l'émetteur-récepteur 6;

NRZ : est un signal issu du synchro-primaire des émetteurs-récepteurs 5 ou 6 suivant la position du multiplexeur 37;

H B/T : est un signal d'horloge régénéré par le synchro-primaire des émetteurs-récepteurs 5 ou 6, suivant la position du multiplexeur 37;

SYNC : au niveau logique bas, ce signal indique que le synchro-primaire de l'émetteur-récepteur 5 ou 5 est verrouillé;

FSKL : est un signal logique pilotant le modulateur FSK des émetteurs-récepteurs 5 ou 6;

N/REP : commande le multiplexeur 37. Lorsqu'il est au niveau logique haut, le laboratoire central reçoit des données de l'émetteur-récepteur 5 à fréquence f1 (cas où l'élément de transmission relais intervient pour transmettre les données émanant du groupe G2 de boîtiers (fig. 1). S'il est au niveau logique 0, les données reçues par le laboratoire central proviennent des boîtiers non relayés (groupe G1);

CDREP : commande le multiplexeur 36. Lorsqu'il prend le niveau logique haut, la sortie du circuit 31 (UART) est connectée à la sortie FSKL f1 pour l'émission d'ordres vers l'unité de transmission relais 3 (RRU) ou chacune d'elles, s'il y en a plusieurs. Lorsqu'il prend la valeur logique basse, le signal FSKL est émis sur la sortie affectée à FSKL f1, et les ordres émis par le laboratoire central transitent vers l'émetteur-récepteur 5 et les unités de transmission relais;

BUSY : indique l'état du détecteur de message FSK 35. Il doit être au niveau logique bas pour commuter le multiplexeur 36.

La carte d'interface 34 comporte une horloge produisant des signaux d'interruption IT pour le microprocesseur 25, soit qu'il s'agisse à période de récurrence constante, soit qu'il s'agisse de signaux marquant les instants Tdb, Tdhf ou Trhf pendant l'interrogation d'une unité de transmission relais (ces instants seront définis plus loin dans la description du mode de fonctionnement du système).

Le circuit détecteur de message FSK 35 surveille l'apparition du signal FSKL. Il fonctionne en basculeur monostable redéclenchable. Si le signal FSKL prend la valeur logique 1 pendant au moins un intervalle de temps $\Delta t$ déterminé, le signal BUSY prend la valeur logique 0 et le microprocesseur peut commander le multiplexeur 36.

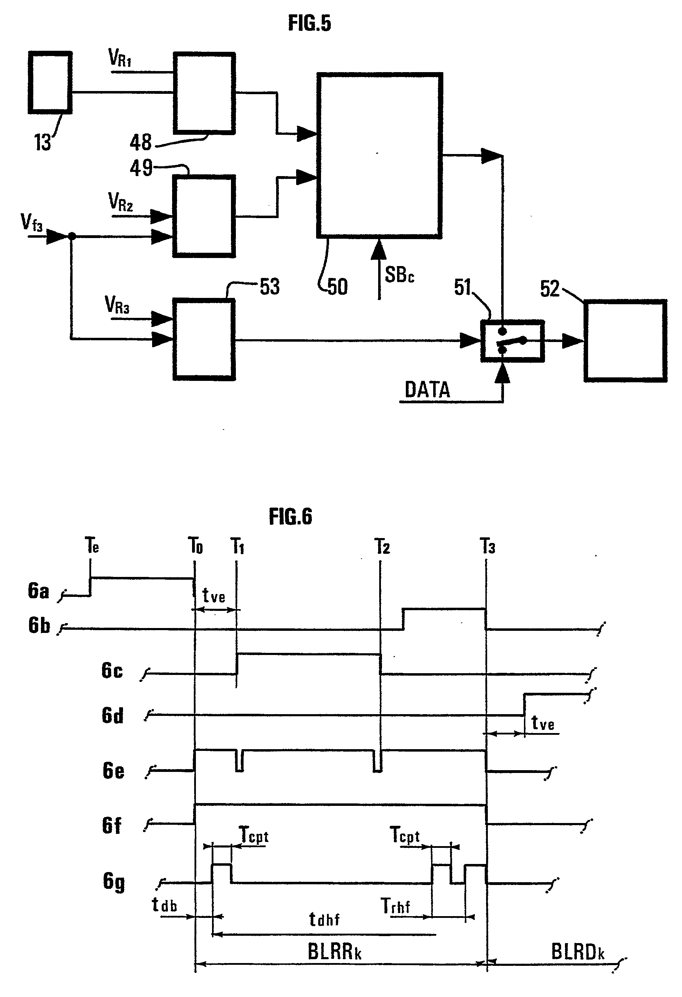

L'ensemble de contrôle 12 (fig. 1) permettant de coordonner les échanges entre les deux émetteurs-récepteurs 10, 11 de chaque unité de transmission relais 3, comporte (fig. 4) un microprocesseur 8 bits 40 communiquant par un bus 41 avec une mémoire morte 42, un organe d'affichage 43, un décodeur d'adresse 44, un élément 45 adaptateur de signaux du type UART, un circuit d'interface 46 comprenant des compteurs programmables (timers) et une carte de mesure 47 de différents paramètres de fonctionnement de l'alimentation 13 et de l'émetteur-récepteur 11.

Les signaux reçus de la partie réceptrice de l'émetteur-récepteur 10 sont appliqués à l'entrée de réception de l'élément adapteur (UART) 45 et celui-ci les transforme en mots de 8 bits qui sont transférés sur le bus 41.

Comme on le verra plus en détail dans la partie description du fonctionnement, le microprocesseur 40 vérifie d'une part que les messages reçus concernent bien l'unité de transmission relais (RRU) 3, qu'ils sont bien destinés à un boîtier d'acquisition dépendant de cette unité relais et qu'ils sont confirmés. Auquel cas, le circuit d'interface 46 transmet une commande appropriée à l'émetteur-récepteur utilisant la fréquence f3 (communication avec les boîtiers d'acquisition du groupe G2).

Chaque unité de transmission relais (RRU) 3 peut être mise dans un état de veille, correspondant à une consommation électrique minimale ou dans un état de réveil. Les messages transmis sont de ce fait précédés d'un signal d'éveil. Lorsqu'une unité relais est concernée, le circuit d'interface 46 délivre un signal V/R d'activation permettant la prise en compte éventuelle des messages.

La carte de mesure 47 comporte un premier convertisseur tension/courant 48 (fig. 5) connecté aux bornes de la batterie d'alimentation 13 et adapté à comparer la tension de celle-ci avec une première tension de référence VR1 et à convertir en variations de courant les écarts entre les deux tensions comparées. Il comporte aussi un second convertisseur tension/courant 49 qui, de la même façon, compare l'amplitude de la porteuse reçue par l'émetteur-récepteur utilisant la fréquence f3 (communication entre l'élément relais et les boîtiers d'acquisition sous son contrôle) avec une tension de référence VR2 et transforme en variations de courant les signaux issus des deux convertisseurs 48, 49 sont appliqués à deux bornes d'entrée de modulation d'un convertisseur courant/fréquence 50. Celui-ci émet un signal dont la fréquence dépend du courant appliqué sur l'une ou l'autre des bornes d'entrée de modulation, la sélection de celle-ci étant effectuée par application d'un signal SBc appliqué sur une entrée de sélection de voie. Le signal issu du convertisseur 50 est appliqué à une première borne d'un commutateur à deux entrées 51, la seconde de celles-ci recevant les signaux de mesure DATA que l'unité de transmission relais 3 (RRU) retransmet vers l'unité de centralisation 1 (CRU). La borne de sortie du commutateur 51 est connectée au modulateur 52 de l'émetteur-récepteur 10 (fig. 1). La sélection des voies est contrôlée par application sur l'entrée de commande du commutateur 51, du signal issu d'un comparateur à seuil 53 qui vérifie la présence ou l'absence du signal de porteuse Vf3 à l'entrée du convertisseur 49. Comme on le verra plus loin, cet agencement permet de retransmettre vers le laboratoire de commande l'état des émetteurs et des batteries d'alimentation et ainsi de surveiller leur bon fonctionnement.

**Fonctionnement du système**

L'unité de centralisation 1 (CRU) gère la transmission des ordres reçus du laboratoire central de commande et d'enregistrement 2 vers tous les boîtiers d'acquisition soit directement au moyen de l'émetteur-récepteur 6 à fréquence f2, soit indirectement au moyen de l'émetteur-récepteur 5 à fréquence f1, par l'intermédiaire d'au moins une unité de transmission relais 3 (RRU), et reçoit en retour la transmission des réponses des différents éléments interrogés. L'unité de centralisation 1 (CRU) envoie deux types de commandes.

- La première est une commande de réveil et/ou d'initialisation d'une unité relais (RRU) comportant une séquence de plusieurs octets qui définit le numéro de l'unité relais 3 interrogée et les numéros de tous les boîtiers dépendant de celle-ci.
- La seconde est une commande qui, convenablement décodée, permet de mettre une unité relais en état de veille (consommation électrique réduite). Cette commande est effectuée par l'intermédiaire du circuit d'interface 44 (cf. fig. 4).

Pour éviter les erreurs de transmission et rendre plus sûre l'interprétation des ordres, les commandes sont répétées trois fois de suite et ne sont prises en compte par les unités relais que si elles sont reconnues au moins deux fois. Les commandes sont émises soit directement par le laboratoire central 2, soit par action d'un opérateur sur le clavier 32 de l'unité de centralisation 1 (CRU) (fig. 3).

L'unité de centralisation 1 (CRU) assure la gestion des deux émetteurs-récepteurs 5, 6 (fig. 1). Elle décode les commandes envoyées vers les boîtiers d'acquisition par le laboratoire central et compare le numéro du boîtier d'acquisition interrogé avec les listes de numéros de boîtiers affectés aux différentes unités relais 3 (RRU) et, si le boîtier interrogé appartient à l'une des listes, il dirige les commandes vers l'émetteur-récepteur à fréquence f1. En retour, selon que le boîtier interrogé est à accès direct ou indirect, il établit la communication entre les émetteurs-récepteurs 6 ou 5 et le laboratoire central.

Les chronogrammes de la figure 6 montrent une séquence de fonctionnement de deux boîtiers, l'un BLRRk relayé par une unité relais 3.

- Le laboratoire central engendre entre les instants successifs Te et To (chronogramme 6a), une séquence d'octets concernant par exemple le boîtier d'acquisition BLRRk qui est émise par les émetteurs des ensembles 5, 6 d'émission-réception sous le contrôle de l'unité de centralisation 1 (CRU). La séquence est décodée par cette unité, par les unités relais 3 (RRU) et par les boîtiers d'acquisition.

- Le boîtier BLRRk concerné ayant reconnu son numéro, commence son cycle d'émission à l'instant T1 (chronogramme 6C) décalé d'un intervalle de temps tve par rapport à l'instant To, et l'interrompt à l'instant T2. L'unité relais 3 (RRU) contrôlant le boîtier BLRRk, déclenche l'émission d'une porteuse à l'instant To (chronogramme 6e).

- Entre les instants To et T1 la porteuse de l'émetteur de l'ensemble d'émission-réception 10 est modulée par le signal issu des convertisseurs 46 et 48 (fig. 5).

- Entre les instants T1 et T2, l'unité de transmission relais 3 (RRU), relaie les réponses émises par l'émetteur de l'ensemble d'émission-réception associé au boîtier concerné.

- Entre les instants T2 et T3, la même porteuse est modulée par le signal issu des convertisseurs 47 et 48 et représentatif de l'amplitude du signal porteur capté par l'ensemble d'émission-réception 11 (fig. 1).

- L'unité de centralisation 1 (CRU) tenant compte que le boîtier d'acquisition concerné (BLRRk) appartient à la liste de boîtiers contrôlés par l'une des unités relais, commande la montée du signal N/REP à la valeur logique 1 (chronogramme 6f et fig. 3) entre les instants To et T3. Le laboratoire central reçoit donc les données provenant du boîtier par la porteuse à fréquence f1. A partir de l'instant To, l'ensemble de compteurs 39 de l'unité de centralisation 7 (fig. 3) engendre une séquence de 3 impulsions.

a) Une première, Tcpt retardée d'un intervalle tdb, déclenche l'acquisition du signal reçu de l'élément relais (RRU), représentant la tension d'alimentation de celle-ci. Il s'agit on le rappelle du signal de modulation délivré par les convertisseurs 48, 50 (fig. 5).

b) une seconde, Trhf retardée d'un intervalle de temps tdhf, déclenche l'acquisition du signal représentant l'amplitude de la porteuse à fréquence f3, délivré par les convertisseurs 9 et 50 (fig. 5). Le retard tdhf est déterminé en fonction du nombre d'échantillons à transmettre. Ce nombre est obtenu en décodant les commandes d'initialisation émises vers les boîtiers d'acquisition;

c) Une troisième, retardée d'un intervalle trhf par rapport à la précédente, déclenche la lecture du résultat de l'acquisition précédente.

La gestion des messages reçus par chaque unité de transmission relais 3 (RRU), s'opère suivant les règles suivantes :

Les unités de transmission relais reçoivent on l'a vu, un message d'initialisation répété trois fois et le prennent en compte s'il est décodé au moins deux fois. Ils leur indiquent la liste des numéros de boîtiers d'acquisition qui sont mis respectivement sous leur contrôle.

Les messages généraux d'interrogation des boîtiers sont émis par l'unité de centralisation 1 (CRU) vers les unités relais 3 (RRU) par le canal radio à fréquence f1 et, de celles-ci, sont relayées par le canal radio à fréquence f3 vers les différents boîtiers.

- Les messages de veille ou réveil mettent les unités relais en position de consommation minimale ou au contraire en état d'émettre.

- Lorsqu'un message ne concerne par une unité relais, son ensemble de contrôle 12 le remet aussitôt en position de veille et le message n'est pas pris en compte.

- A la réception de messages concernant un boîtier d'acquisition, l'unité relais 3 après décodage, commande son transfert d'une émetteur-récepteur à l'autre pour sa transmission.

Les échanges avec les boîtiers d'acquisition du groupe G3 au moyen du câble 4 (fig. 1), sont gérés directement par le laboratoire central 1.

## Revendications

1) Système de transmission de signaux sismiques entre une pluralité de boîtiers d'acquisition adaptés à collecter chacun les signaux provenant d'au moins un récepteur sismique, à les numériser et les mémoriser et, sur commande issue d'un laboratoire central de commande et d'enregistrement, à transférer à celui-ci par voie hertzienne les données mémorisées, comportant des moyens d'émission et de réception par radio associés respectivement aux différents boîtiers d'acquisition, une unité de centralisation des communications (1) associée au laboratoire central (2), comportant un premier ensemble (5) d'émission et de réception radio adapté à fonctionner à une première fréquence (f1) et un second ensemble (6) d'émission et réception radio adapté à fonctionner à une seconde fréquence (f2) différente de la première, et au moins une unité relais (3), caractérisé en ce que chaque unité relais comporte un premier ensemble (10) d'émission et de réception radio adapté à fonctionner à ladite première fréquence pour assurer les échanges entre ladite unité relais et le premier ensemble (5) d'émission et de réception radio de l'unité de centralisation, et un second ensemble (11) d'émission et de réception radio, adapté à fonctionner à une troisième fréquence (f3) particulière à chaque unité relais, pour assurer des communications avec au moins un premier groupe (G2) de boîtiers d'acquisition, l'unité de centralisation comporte un ensemble de contrôle (7) pourvu d'un organe de traitement programmable, pour gérer les transferts à la première fréquence (f1) entre l'unité de centralisation (1) et chaque unité relais (3) ainsi que les transferts entre l'unité de centralisation et au moins un second groupe (G1) de boîtiers d'acquisition à la seconde fréquence (f2), et chaque unité relais comporte un ensemble de contrôle (13) pourvu d'un organe de traitement programmable pour gérer ses propres transferts à ladite troisième fréquence avec le premier groupe (G2) de boîtiers d'acquisition qui lui est associé.

2) Système selon la revendication 1, caractérisé en ce que les ensembles d'émission et réception radio associés aux boîtiers, à l'unité de centralisation et à chaque unité relais comporte un générateur à synthèse de fréquence et des moyens (51, 53) de sélection commutables pour choisir la fréquence d'émission-réception de chacun d'eux parmi une pluralité de fréquences distinctes.

3) Système selon la revendication 1, caractérisé en ce que chaque unité relais comporte des moyens de mesure de signaux de test et des moyens (50, 52) pour traduire les signaux de test en signaux de modulation de ladite première fréquence (f1), les ensembles de contrôle (7, 13) de l'unité de centralisation (1) et de chaque unité relais (3) étant adaptés à commander la transmission des signaux de test dans des intervalles de temps entre les transmissions de signaux de commande et de données.

4) Système selon la revendication 3, caractérisé en ce qu'il comporte des moyens pour détecter l'amplitude de signaux de porteuse et des moyens de liaison pour appliquer lesdits signaux de porteuse et des tensions d'alimentation à contrôler, à des convertisseurs (48, 49, 50) adaptés à changer lesdites tensions sous contrôle ou les amplitudes mesurées en signaux à fréquence variable.

5) Système selon la revendication 3, caractérisé en ce que lesdits organes de traitement programmables comportent des microprocesseurs (25, 40).

6) Système selon la revendication 1, caractérisé en ce qu'il comporte des moyens d'émission d'ondes hertziennes à synthèse de fréquence programmable.

7) Système selon la revendication 6, caractérisé en ce que les moyens d'émission d'ondes comportent un oscillateur commandé par une tension et un circuit bouclé comportant un synthétiseur de fréquence à prédiviseur (16) appliquant à une fréquence de référence émise par un quartz (17) un facteur de division dépendant de moyens de sélection (18).

8) Système selon la revendication 5, caractérisé en ce que les organes de traitement programmables comportent des moyens de mémorisation de listes de boîtiers d'acquisition et des adresses d'accès à ces boîtiers d'acquisition.

9) Système selon la revendication 5, caractérisé en ce que l'organe de traitement de l'unité de centralisation (1) comporte des moyens d'introduction et de visualisation d'instructions.

## Patentansprüche

1. System zur Übertragung seismischer Daten zwischen einer Vielzahl von Erfassungskästchen, die so ausgelegt sind, daß sie je die von wenigstens einem seismischen Empfänger stammenden Signale sammeln, sie digitalisieren und sie speichern und auf einen von einem Steuerzentral- und Aufzeichnungslabor hin kommenden Befehl an dieses auf dem Hertz'schen Weg die gespeicherten Daten überführen, mit Funksende- und Emgfangsmitteln, die jeweils den verschiedenen Erfassungskästchen zugeordnet sind, einer Zentralisierungseinheit (1) für die dem Zentrallabor (2) zugeordneten Verbindungsmittel (1) mit einer ersten Funksende- und Empfangsanordnung (5), die so ausgelegt ist, daß sie bei einer ersten Frequenz (f1) arbeitet und eine zweite Funksende- und Emgfangsanordnung (6) die so ausgelegt ist, daß sie bei einer zweiten von der ersten unterschiedlichen Frequenz (2) arbeitet und mit wenigstens einer Relaiseinheit (3), dadurch gekennzeichnet, daß jede Relaiseinheit eine erste Funksende- und Empfangsanordnung (10) aufweist, die so ausgelegt ist, daß sie bei dieser ersten Frequenz arbeitet, um die Austauschvorgänge zwischen dieser Relaiseinheit und der ersten Funksende- und Empfangsanordnung (5) der Zentralisierungseinheit sicherzustellen und eine zweite Funksende- und Empfangsanordnung (11), die so ausgelegt ist. daß sie bei einer dritten jeder Relaiseinheit eigenen Frequenz (f3) arbeitet, um Verbindungen mit wenigstens einer ersten Gruppe (G2) von Erfassungskästchen sicherzustellen, wobei die Zentralisierungseinheit eine mit einem programmierbaren Verarbeitungsorgan versehene Regelanordnung (7) umfaßt, um die Transferierungen bei der ersten Frequenz (f1) zwischen der Zentralisierungseinheit (1) und jeder Relaiseinheit (3) sowie die Transferierungen zwischen der Zentralisierungseinheit und wenigstens einer zweiten Gruppe (G1) von Erfassungskästchen bei der zweiten Frequenz zu führen und jede Relaiseinheit eine Regelanordnung (13) umfaßt, die mit einem programmierbaren Verarbeitungsorgan versehen ist, um ihre eigenen Transferierungen bei dieser dritten Frequenz mit der ersten Gruppe (G2) der ihr zugeordneten Erfassungskästchen zu führen.

2. System nach Anspruch 1, dadurch gekennzeichnet, daß die den Kästchen, der Zentralisierungseinheit und jeder Relaisanordnung zugeordneten Funksende- und Empfangsanordnungen einen Frequenzsynthesizer und umschaltbare Wählmittel (51, 53) aufweisen, um die Sende-Empfangsfrequenz jeder von diesen aus einer Vielzahl unterschiedlicher Frequenzen zu wählen.

3. System nach Anspruch 1, dadurch gekennzeichnet, daß jede Relaiseinheit Mittel zum Messen von Testsignalen sowie Mittel (50, 52) umfaßt, um die Testsignaie in Modulationssignale dieser ersten Frequenz (f1) umzusetzen, wobei die Regelanordnungen (7, 13) der Zentralisierungseinheit (1) und jeder Relaiseinheit (3) so ausgelegt sind, daß sie die Übertragung der Testsignale in Zeitintervallen zwischen den Übertragungen von Steuersignalen und von Daten steuern.

4. System nach Anspruch 3, dadurch gekennzeichnet, daß es Mittel umfaßt, um die Amplitude von Trägersignalen zu ermitteln sowie Verbindungsmitteln um diese Trägersignale sowie zu regelnde Speisespannungen an Wandler (48, 49, 50) zu legen, die so ausgebildet sind, daß sie diese in Regelung befindlichen Spannungen oder die gemessenen Amplituden in Signale variabler Frequenz verändern.

5. System nach Anspruch 3, dadurch gekennzeichnet, daß diese programmierbaren Verarbeitungsorgane Mikroprozessoren (25, 40) umfassen.

6. System nach Anspruch 1, dadurch gekennzeichnet, daß es Mittel zum Senden Hertz'scher Wellen bei programmierbarer Frequenzsynthese umfaßt.

7. System nach Anspruch 6, dadurch gekennzeichnet, daß die Mittel zum Aussenden von Wellen einen von einer Spannung gesteuerten Oszillator sowie einen Schleifenkreis mit einem Frequenzsynthesizer mit Vorteiler (16) umfassen, der bei einer von einem Quartz (17) ausgesandten Bezugsfrequenz einen von Wählmitteln (18) abhängigen Teilungsfaktor anlegt.

8. System nach Anspruch 5, dadurch gekennzeichnet, daß die programmierbaren Verarbeitungsorgane Mittel zum Speichern von Listen von Erfassungskästchen sowie Zugriffsadressen zu diesen Erfassungskästchen aufweisen.

9. System nach Anspruch 5, dadurch gekennzeichnet, daß das Verarbeitungsorgan der Zentralisierungseinheit (1) Mittel zum Einführen und Sichtbarmachen von Befehlen umfaßt.

## Claims

1. System for the transmission of seismic signals between a plurality of acquisition boxes each adapted for collecting the signals from at least one seismic receiver, for digitising and storing them and, on a command from a central control and recording laboratory, for transferring the stored data to the latter by radio link, comprising means for radio transmission and reception associated respectively with the different acquisition boxes, a communications centralisation unit (1) associated with the central laboratory (2), centralisation a first radio transmission and reception set (5) adapted for operating at a first frequency (f1) and a second radio transmission and reception set (6) adapted for operating at a second frequency (f2), different from the first, and at least one relay unit (3), characterised in that each relay unit includes a first radio transmission and reception set (10) adapted for operating at said first frequency to provide the exchanges between said relay unit and the first radio transmission and reception set (5) of the centralisation unit, and a second radio transmission and reception set (11) adapted for operating at a third frequency (f3) specific to each relay unit, to provide communication with at least a first group (G2) of acquisition boxes, the centralisation unit includes a control assembly (7) having a programmable processing device for managing the transfer at the first frequency (f1) between the centralisation, unit (1) and each relay unit (3) as well as the transfers between the centralisation unit and at least a second group (G1) of acquisition boxes at the second frequency (f2), and each relay unit comprises a control unit (13) with a programmable processing device for managing its own transfers at said third frequency with the first group (G2) of acquisition boxes which is associated therewith.

2. System as claimed in claim 1, characterised in that the radio transmission and reception sets associated with the boxes, with the centralisation unit and with each relay unit include a frequency synthesis generator and switchable selection means (51, 53) for selecting the transmission/reception frequency of each of them from a plurality of separate frequencies.

3. System as claimed in claim 1, characterised in that each relay unit includes means for measuring test signals and means (50, 52) for translating the test signals into signals for modulating said first frequency (f1), the control units (7, 13) of the centralisation unit (1) and of each relay unit (3) being adapted for controlling the transmission of the test signals in time intervals between the data and control signal transmissions.

4. System as claimed in claim 3, characterised in that it incorporates means for detecting the amplitude of the carrier wave signal and means of connection for applying said carrier wave signals and supply voltages to be controlled to converters (48, 49, 50) adapted for changing said voltages under control or the amplitudes measured into variable frequency signals.

5. System as claimed in claim 3, characterised in that said programmable processing devices include microprocessors (25, 40).

6. System as claimed in claim 1, characterised in that it includes means for programmable frequency synthesis radio transmission.

7. System as claimed in claim 6, characterised in that the radio transmission means include a voltage controlled oscillator and a looped circuit incorporating a frequency synthesizer with a predivider (16) applying to a reference frequency supplied by a quartz (17) a division factor depending on the means of selection (18).

8. system as claimed in claim 5, characterised in that the said programmable processing devices include means for storing lists of acquisition boxes and access addresses for these acquisition boxes.

9. System as claimed in claim 5, characterised in that the processing device in said centralisation unit (1) incorporates means for inputting and displaying instructions.

FIG.1

EP 0 250 280 B1

**FIG.2**

**FIG.4**

FIG.3

29

25

27

28

30

39

26

iT

iT

38

DATA

31

35

34

B  A

36

BUSY

33

32

FSKL f₁

FSKL

FSKL f₂

CDE EMET

CDE EM f₂

CDE EM f₁

ST EM f₂

CDREP

N/REP

SYNC f₂

SYNC f₁

HB/T f₂

HB/T f₁

NRZ f₂

NRZ f₁

37

SYNC

HB/T

RNZ

EP 0 250 280 B1

**FIG.5**

**FIG.6**